# EUROPÄISCHE PATENTANMELDUNG

(11) **EP 2 853 484 A1**
(43) Veröffentlichungstag der Anmeldung: **01.04.2015**
(21) Anmeldenummer: 14185480.2
(22) Anmeldetag: 19.09.2014
(51) Int. Cl.: B64C 11/38, B64C 31/024, B64D 27/24

(54) **Elektrisch angetriebenes Flugzeug**

(30) Priorität: 30.09.2013 DE 102013219724
(71) Anmelder: Siemens Aktiengesellschaft, 80333 München (DE)
(72) Erfinder: Körner, Olaf, 90469 Nürnberg (DE); Lange, Thomas, 90766 Fürth (DE); Petermaier, Korbinian, 80799 München (DE); Schramm, Marco, 90409 Nürnberg (DE)

(57) **Zusammenfassung**

Die Erfindung betrifft ein elektrisch angetriebenes Flugzeug (15) das mittels zumindest einer Antriebsvorrichtung angetrieben wird, wobei die Antriebsanordnung (17) folgende Merkmale aufweist:
- einen Flugzeugpropeller mit mehreren Propellerblättern (1), die an einer Propellernabe (2) befestigt sind, die von einer Propellerwelle (3) antreibbar ist, wobei die Propellerwelle radial und axial gelagert ist,
- einer dynamoelektrischen rotatorischen Maschine, mit einem Stator (7) und einem Rotor (8), wobei der Rotor (8) direkt mit der Propellerwelle gekoppelt ist,
- einer Tragstruktur (5), die das zumindest eine Propellerlager (4) und den Stator (7) aufnimmt, wobei die Tragstruktur (5) mechanisch mit einer Flugzeugstruktur (6) des Flugzeugs (15) gekoppelt ist.

## Beschreibung

Die Erfindung betrifft ein elektrisch angetriebenes Flugzeug das mittels zumindest einer Antriebsvorrichtung antreibbar ist und einen Flugzeugpropeller aufweist.

Flugzeuge mit Propellerantrieben werden üblicherweise durch Verbrennungskraftmaschinen, elektrische Maschinen oder hybride Kombinationen von beiden angetrieben. Bei den elektrisch angetriebenen Propellern unterscheidet man Getriebe oder Direktantriebe. Die Direktantriebe weisen durch Fehlen eines Übersetzungsangetriebes eine geringere Komplexität und damit höhere Zuverlässigkeit sowie eine höhere Effizienz des gesamten Antriebsstranges auf.

Propeller und elektrische Maschinen weisen jeweils eine eigene Lagerung mit ihren notwendigen Freiheitsgraden auf. Die elektrische Maschine wird rotorseitig üblicherweise über eine Kupplung mit der Propellerwelle und statorseitig mit der Flugzeugstruktur verbunden. Die Lagerung des Propellers ist derart ausgelegt, dass sie für den notwendigen Schub benötigten axialen Zugkräfte aufnehmen und diese an der Flugzeugstruktur abstützen. Die Motorlagerung ist dabei in axialer Richtung entkoppelt. Zusätzlich sind neben axialen Kräften auch gyroskopische Momente und radiale Biegemomente bzw. Kräfte zu berücksichtigen.

Die zusätzlichen Radiallagerstellen des Elektromotors stellen dabei aber eine mechanische Überbestimmung der Antriebsachse dar, so dass die Kupplung zwischen Propeller und Motorenwelle dementsprechend flexibel ausgeführt sein muss.

Ausgehend davon liegt der Erfindung die Aufgabe zugrunde, bei elektrisch angetriebenen Flugzeugen mit Direktantrieben eine weitere Kompaktierung der Antriebsanordnung zu schaffen.

Die Lösung der gestellten Aufgabe gelingt durch ein elektrisch angetriebenes Flugzeug das mittels zumindest einer Antriebsvorrichtung angetrieben wird, wobei die Antriebsanordnung folgende Merkmale aufweist:
- einen Flugzeugpropeller mit mehreren Propellerblättern, die an einer Propellernabe befestigt sind, die von einer Propellerwelle antreibbar ist, wobei die Propellerwelle radial und axial gelagert ist,
- einer dynamoelektrischen rotatorischen Maschine, mit einem Stator und einem Rotor, wobei der Rotor direkt mit der Propellerwelle gekoppelt ist,
- einer Tragstruktur, die das zumindest eine Propellerlager und den Stator aufnimmt, wobei die Tragstruktur mechanisch mit einer Flugzeugstruktur des Flugzeugs gekoppelt ist.

Erfindungsgemäß wird die elektrische rotatorische Maschine lagerlos ausgeführt, so dass die Lagerung des Propellers zusätzlich die Aktivteilkomponenten der elektrischen Maschine übernimmt. Der Rotor der elektrischen Maschine wird dabei direkt auf die Propellerwelle drehfest aufgebracht, wobei der Stator der elektrischen Maschine mit der einer Aufhängung des Propellers also mit der Tragstruktur mechanisch verbunden ist. Damit kann nunmehr auf eine flexible Kupplung zwischen der Welle des Propellers und der Welle des Motors verzichtet werden, wobei sich insbesondere auch Anforderungen an die mechanischen Toleranzen der Welle reduzieren lassen.

Erfindungsgemäß ist dabei die Lagerung des Propellers so auszulegen, die zusätzlich eingetragenen Lasten des Rotors mit aufgenommen werden. Weiterhin ist dabei besonders vorteilhaft, wenn das zusätzliche Gewicht des Rotors möglichst gering ist und dessen axiale Ausdehnung sowie der Abstand zur Lagerung klein im Verhältnis zur Stützweite der Lagerung des Propellers ist.

In einer Ausgestaltung des elektrisch angetriebenen Flugzeuges weist die elektrische rotatorische Maschine eine Leistung von 80 bis 1000 kW auf. Die elektrische rotatorische Maschine weist insbesondere auch einen kompakten Außendurchmesser auf, der zwischen 150mm und 1000mm. Der Außendurchmesser betrifft insbesondere ein Aktivteil der elektrischen rotatorischen Maschine.

Die elektrische rotatorische Maschine ist in einer Ausgestaltung auch als Axialflussmaschine oder als Transversalflussmaschine ausführbar.

Vorteilhafterweise sind dabei die Aktivteile des Rotors auf einem Tragstern positioniert, der das Drehmoment auf die Welle des Propellers trägt ohne dabei selbst ein großes Trägheitsmoment und große Massen aufzuweisen.

In einer Ausgestaltung des elektrisch angetriebenen Flugzeuges weist dieses eine Vielzahl axial hintereinander gereihter elektrischer rotatorischer Maschine auf. Die Vielzahl der Maschinen sind direkt mit der Propellerwelle gekoppelt. Bei dieser Anordnung verlängert sich zwar die axiale Ausdehnung, jedoch kann die Bauhöhe reduziert werden, wenn elektrische rotatorische Maschinen mit geringerem Außendurchmesser verwendet werden, was vorteilhaft für das aerodynamische Verhalten sein kann. Auch das Trägheitsverhalten der Maschine könnte sich verbessern.

Die Erfindung ist sowohl auf Innenläufermaschinen als auch Außenläufermaschinen anzuwenden, da letztlich die Lagerung komplett von der Lagerung des Propellers übernommen wird. Es ist lediglich darauf zu achten, das Gewicht des Rotors möglichst gering zu halten, sowie die axialen Ausdehnungen, insbesondere den Abstand zur Lagerung im Verhältnis zur Stützweite der Propellerlagerung klein zu halten.

Um einen besonderen effizienten Antriebsvorgang vornehmen zu können, werden die Propellerblätter in ihrem Anstellwinkel zur Luftströmung hydraulisch oder elektrisch verstellt. Eine hydraulische Verstellung der Propellerblätter folgt über eine Hydraulikpumpe und einen Governor, der einen hydraulischen Überdruck aufbaut, der wiederum einen Verstellmechanismus in der Propellernabe betätigt. Das Öl dieses Hydraulikkreislaufs wird vorteilhafterweise auch für die Lagerung der Propellerwelle herangezogen. Hierzu wird insbesondere nur ein Kreislauf für das Öl verwendet.

Um eine besonders stromlinienförmige Tragstruktur der gesamten Antriebsanordnung aufzuweisen, ist die Tragstruktur der Antriebsanordnung trichterförmig ausgeführt, wobei insbesondere in der Nähe des Propellers die Querschnittsfläche vergleichsweise gering ist und sich nach hinten, d.h. in größerem Abstand zum Propeller erweitert. Dies hat insbesondere den Vorteil, dass dort bei der erweiterten Querschnittsfläche der Tragstruktur die elektrische Maschine anzuordnen ist und aufgrund der erweiterten Querschnittsfläche dementsprechende Drehmomente durch die elektrische Maschine bereitgestellt werden können.

Die Erfindung sowie weitere vorteilhafte Ausgestaltungen der Erfindung werden in dem vorgestellten Ausführungsbeispiel in einer prinzipiellen Darstellung näher erläutert. Dabei zeigen:
- FIG 1: ein Flugzeug in Frontansicht,
- FIG 2: eine Antriebsanordnung.

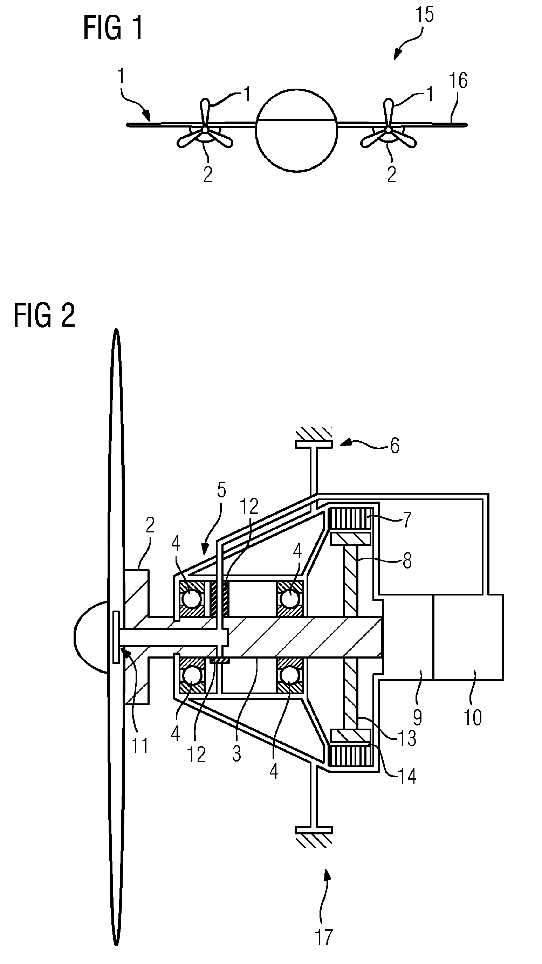

FIG 1 zeigt in prinzipieller Ansicht ein Flugzeug 15 das an seinen Tragflächen 16 jeweils eine Antriebsanordnung 17 aufweist. Diese Antriebsanordnung 17 weist Propeller auf, die dem Vortrieb dienen und die über eine elektrische Maschine angetrieben werden.

FIG 2 zeigt die Antriebsanordnung 17 in einem prinzipiellen Längsschnitt. Der Flugzeugpropeller weist mehrere Propellerblätter 1 auf, die in einer Propellernabe 2 zusammengeführt sind. In der Propellernabe 2 ist der Verstellmechanismus 11 angeordnet, der zur Winkelverstellung der Propellerblätter führt. Die Propellernabe 2 wird durch eine Propellerwelle 3 in Rotation versetzt, wobei die Propellerwelle 3 direkt mit einem Rotor 8, einer dynamoelektrischen rotatorischen Maschine verbunden ist. Radial an den Rotor 8 schließt sich ein Stator 7 der dynamoelektrischen Maschine an, der durch einen Luftspalt 14 vom Rotor 8 getrennt ist. Neben einer Radialflussmaschine ist auch eine Axialflussmaschine oder eine Transversalflussmaschine - TF-Maschine - einsetzbar, jedoch nicht explizit dargestellt.

Bei Bestromung eines nicht näher dargestellten Wicklungssystems des Stators 7 tritt durch elektromagnetische Wechselwirkung mit beispielsweise Permanentmagneten des Rotors 8 eine Rotation dieses Rotors 8 und der damit verbundenen Propellerwelle 3 auf. Damit wird der Propeller in Rotation versetzt und es erfolgt ein Antrieb des Flugzeugs 15.

Vorteilhafterweise ist nunmehr sowohl die Lagerung der Propellerwelle als auch die Lagerung des Rotors 8 in einer Lageranordnung zusammengeführt. Diese Lager 4 nehmen sowohl die Radial- als auch die Axialkräfte bei Betrieb der Antriebsanordnung 17 auf.

Vorteilhafterweise ist damit nunmehr keine separate Lagerung des Motors und einer Propellerwelle notwendig, so dass die gesamte Antriebsanordnung wesentlich kompakter aufgebaut sein kann. Die Tragstruktur 5 die sowohl die Lageranordnung als auch den Stator 7 hält, ist wiederum in der Flugzeugstruktur 6 abgestützt. Um ein dementsprechendes Drehmoment zu erzeugen, weist der Rotor 8 einen vergleichsweise großen Durchmesser auf. Die Aktivteile des Rotors 8 sind dabei am Außenumfang angeordnet, so dass die Aktivteile des Rotors 8 durch einen Tragstern 13 der mit der Propellerwelle drehfest verbunden ist, gehalten werden. Dieser Tragstern 13 wird aus Trägheits- und Massegründen vergleichsweise leicht ausgeführt. Dies gelingt durch Einsatz von entsprechenden Materialien oder aber durch Ausnehmungen beispielsweise einer Scheibe.

Um nunmehr die Propellerblätter 1 des Propellers zu verstellen, wird über eine Hydraulikpumpe 9 und einer dem Überdruck bereitstellenden Governor 10 ein hydraulischer Verstellmechanismus in der Propellernabe 2 angesteuert. Über Hydraulikleitungen, die im Bereich des Lagers 4 verlaufen, kann durch eine, insbesondere technisch bedingte, leckbehaftete Dichtung 12 gleichzeitig eine Kühlung und Schmierung der Lagerung erfolgen.

Besonders vorteilhaft ist es, aber nicht näher dargestellt, wenn die gesamten Ansteuerleitungen und Hydraulikleitungen innerhalb einer hohlen Propellerwellen verlaufen. Dies führt zu einer weiteren Kompaktierung der gesamten Antriebsanordnung 17.

## Patentansprüche

1. Elektrisch angetriebenes Flugzeug (15) das mittels zumindest einer Antriebsvorrichtung angetrieben wird, wobei die Antriebsanordnung (17) folgende Merkmale aufweist:
- einen Flugzeugpropeller mit mehreren Propellerblättern (1), die an einer Propellernabe (2) befestigt sind, die von einer Propellerwelle (3) antreibbar ist, wobei die Propellerwelle radial und axial gelagert ist,
- einer dynamoelektrischen rotatorischen Maschine, mit einem Stator (7) und einem Rotor (8), wobei der Rotor (8) direkt mit der Propellerwelle gekoppelt ist,
- einer Tragstruktur (5), die das zumindest eine Propellerlager (4) und den Stator (7) aufnimmt, wobei die Tragstruktur (5) mechanisch mit einer Flugzeugstruktur (6) des Flugzeugs (15) gekoppelt ist.

2. Elektrisch angetriebenes Flugzeug (15) nach Anspruch 1, **dadurch gekennzeichnet, dass** der Rotor (8) als Außen- oder Innenläufer ausgeführt ist.

3. Elektrisch angetriebenes Flugzeug (15) nach Anspruch 1 oder 2, **dadurch gekennzeichnet, dass** die Propellerblätter (1) in ihrem jeweiligen Anstellwinkel hydraulisch oder elektrisch verstellbar sind.

4. Elektrisch angetriebenes Flugzeug (15) nach Anspruch 3, **dadurch gekennzeichnet, dass** die hydraulische Verstellung mittels einer Hydraulikpumpe (9) und einem Governor (10) erfolgt.

5. Elektrisch angetriebenes Flugzeug (15) nach einem der vorhergehenden Ansprüche, **dadurch gekennzeichnet**, dass die Mittel zum Ansteuern und Verstellen der Propellerblätter über die als Hohlwelle ausgeführte Propellerwelle (3) stattfindet.

6. Elektrisch angetriebenes Flugzeug (15) nach einem der vorhergehenden Ansprüche, **dadurch gekennzeichnet**, dass die Tragstruktur (5) trichterförmig ausgeführt ist, wobei ausgehend vom Propeller die Querschnittsfläche der Tragstruktur zunimmt.
